# Europäisches Patentamt

# European Patent Office

# Office européen des brevets

(19)

(11) Veröffentlichungsnummer: **0 021 053**
**B1**

(12) **EUROPÄISCHE PATENTSCHRIFT**

(45) Veröffentlichungstag der Patentschrift:
**22.08.84**

(21) Anmeldenummer: **80102867.1**

(22) Anmeldetag: **22.05.80**

(51) Int. Cl.³: **G 08 C 19/02, H 04 B 3/02,
H 04 B 3/46, H 04 L 11/08,
H 04 L 25/02**

(54) Übertragungseinrichtung.

(30) Priorität: **07.06.79 DE 2923156**

(43) Veröffentlichungstag der Anmeldung:
**07.01.81 Patentblatt 81/1**

(45) Bekanntmachung des Hinweises auf die Patenterteilung:
**22.08.84 Patentblatt 84/34**

(84) Benannte Vertragsstaaten:
**AT BE CH DE FR GB IT LI SE**

(56) Entgegenhaltungen:
**AT - B - 342 142
DE - B - 1 033 595
DE - B - 2 035 625
DE - B - 2 038 537
GB - A - 1 369 071**

**G. KRAUS "Einführung in die Datenübertragung", 1.
Auflage, 1978, R. OLDENBOURG Verlag GmbH,
München, Seiten 123-131**

(73) Patentinhaber: **SIEMENS AKTIENGESELLSCHAFT,
Berlin und München Wittelsbacherplatz 2,
D-8000 München 2 (DE)**

(72) Erfinder: **Brajder, Antonio, Dipl.-Ing., Am Europakanal,
D-8520 Erlangen (DE)**
Erfinder: **Kublick, Christian, Dipl.-Ing.,
Eskilstunastrasse 19, D-8520 Erlangen (DE)**

## Beschreibung

Die Erfindung betrifft eine Übertragungseinrichtung mit einer Senderbaugruppe mit mindestens einem Sender, der mit einem eingeprägten Strom ein Signal an mehrere Empfänger überträgt, die in räumlich getrennten Empfängerbaugruppen angeordnet sind, wobei die Empfänger eingangsseitig in Reihe geschaltet sind.

Derartige Übertragungseinrichtungen sind im Handel erhältlich. Zur sicheren Übertragung von Signalen werden häufig eingeprägte Ströme anstelle eingeprägter Spannungen verwendet, da die Stromübertragung im Gegensatz zur Spannungsübertragung bei Verschiebungen des Bezugspotentials zwischen Sender und Empfänger nicht zu Fehlsignalen führt. Wenn mehrere Empfänger an einen Sender angeschlossen werden sollen, so kann man die Empfänger in Reihe schalten. Die Überwachung von Sender und Empfängern wird dadurch sehr einfach. Diese Anordnung hat jedoch den Nachteil, dass jede Unterbrechung in der Reihenschaltung zum Ausfall aller Empfänger führt. Um dies zu vermeiden, kann man für jeden Empfänger einen eigenen Sender Vorsehen. Dabei muss jedoch ein erhöhter Schaltungsaufwand mit entsprechend erhöhter Ausfallwahrscheinlichkeit in Kauf genommen werden. Ausserdem wird die Kontrolle aller gesendeten und empfangenen Signale auf Übereinstimmung wesentlich schwieriger.

Bei Unterbrechung eines Empfängers oder einer Übertragungsleitung steigt die Spannung am Schwellwertglied an, bis dieses leitend wird und den unterbrochenen Übertragungsweg kurzschliesst. Damit wird erreicht, dass die Unterbrechung eines Empfängers oder einer Übertragungsleitung nicht zum Ausfall aller Empfänger führt. Da nur ein Sender für alle Empfänger erforderlich ist, ist eine einfache Überwachung des gesendeten Signals möglich und der Schaltungsaufwand bleibt gering.

Bei einer Übertragungseinrichtung für unipolare Signale ist zweckmässigerweise jedes Schwellwertglied eine Z-Diode, bei einer Übertragungseinrichtung für bipolare Signale besteht zweckmässigerweise jedes Schwellwertglied aus der Reihenschaltung zweier gegeneinander geschalteter Z-Dioden. Die Schwellwertglieder werden damit mit einfachen und zuverlässigen Bauelementen realisiert. Die Zenerspannung jeder Z-Diode muss dabei grösser sein als die maximale Eingangsspannung des zugeordneten Empfängers einschliesslich der Spannungsabfälle der Übertragungsleitung.

Ferner ist aus der FR-A-1 441 856 die Reihenschaltung von räumlich getrennten ohmschen Widerständen (Glühlampen) einer Energieversorgungseinrichtung bekannt, wobei die Widerstände über eine Schleifenleitung untereinander verbunden sind. Um zu verhindern, dass bei Bruch einer Glühwendel in einer Glühlampe alle anderen Glühlampen ebenfalls ausfallen, ist in jedem Lampensockel ein spannungsabhängiger Widerstand angeordnet, der beim Spannungsanstieg aufgrund des Glühwendelbruches seinen Widerstand verringert. Die unterbrochene Glühwendel wird durch den parallelgeschalteten Widerstand, der beispielsweise ein Varistor sein kann, überbrückt, so dass der Stromfluss durch die übrigen Glühlampen erhalten bleibt.

Aufgabe der Erfindung ist es, eine Übertragungseinrichtung der eingangs genannten Art so auszugestalten, dass die Signalübertragung bei geringem Schaltungsaufwand sicher ist, indem auch die Reihenschaltung der Übertragungsleitungen überwacht wird.

Diese Aufgabe wird erfindungsgemäss dadurch gelöst, dass in jedem Sender 1 zwischen seinen Ausgangsklemmen eine Reihenschaltung von Schwellwertgliedern 2, 3, 4 angeschlossen ist, deren Anzahl der Anzahl der Empfänger 5, 6, 7 entspricht, wobei jeder Empfänger 5, 6, 7 eingangsseitig über eine gesonderte Übertragungsleitung B einem Schwellwertglied 2, 3, 4 parallelgeschaltet ist.

Zur Überwachung des gesendeten Signals ist vorteilhafterweise in der Senderbaugruppe jeder Reihenschaltung von Schwellwertgliedern ein Kontrollempfänger nachgeschaltet. Durch diese Überwachung wird die Übertragungssicherheit weiter gesteigert. Da ein Sender alle Empfänger speist, sind zwangsläufig alle gesendeten Signale gleich, so dass ein Kontrollempfänger ausreicht.

Bei einer Übertragungseinrichtung für Binärsignale kann der Ausgang jedes Kontrollempfängers mit einem ersten Eingang einer Antivalenzstufe zum Signalvergleich verbunden sein, an deren zweitem Eingang das zu übertragende Signal ansteht. Damit wird das vom Sender an alle Empfänger abgegebene Signal mit dem zu übertragenden Signal verglichen. Zur Störmeldung bei Abweichung des gesendeten Signals von dem zu übertragenden Signal wird jeder Antivalenzstufe vorteilhafterweise eine Meldestufe nachgeschaltet. Eine selbsttätige Abschaltung von fehlerhaft gesendeten Signalen wird erreicht, wenn der Ausgang jeder Antivalenzstufe mit dem Steuereingang eines zwischen Senderausgang und Bezugspotential der Schaltungsanordnung liegenden Schalters verbunden ist.

Bei einer Übertragungseinrichtung mit mehreren Sendern zur Übertragung einer Binärsignalkombination kann jedem Kontrollempfänger ein Decoder zur Erkennung unzulässiger Signalkombinationen nachgeschaltet sein. Dadurch werden unzulässige Signalkombinationen bereits auf der Senderseite erkannt. Zusätzlich ist eine Erkennung von Fehlern auf dem Übertragungsweg, die zu einer unzulässigen Signalkombination führen, möglich, wenn jedem Empfänger ein Decoder zur Erkennung unzulässiger Signalkombinationen nachgeschaltet ist.

Dem Decoder kann ein Verzögerungsglied nachgeschaltet sein. Damit wird erreicht, dass bei Fehlern im Sender eine Störmeldung in der Empfängerbaugruppe verzögert auftritt. Wenn der Sender bei einer Störung des Senders selbsttätig abschaltet, tritt in der Empfängerbaugruppe keine Störmeldung auf, so dass eine Selektivität der Störmeldung erzielt wird.

Die Senderbaugruppe kann für jedes zu übertragende Signal einen Hauptsender und einen Kontrollsender aufweisen, wobei der Kontrollsender das invertierte Signal des Hauptsenders überträgt. Dabei wird jedes Signal redundant übertragen, wobei die invertierte Übertragung eine einfache Kontrolle ermöglicht. Ein geringerer Aufwand bei nur unwesentlich verringerter Übertragungssicherheit ergibt sich, wenn die Senderbaugruppe für jedes zu übertragende Signal einen Hauptsender sowie für mehrere zu übertragende Signale einen gemeinsamen Kontrollsender aufweist, wobei der Kontrollsender die invertierte Summe der Signale des Hauptsenders überträgt.

Die genannte Übertragung eines nichtinvertierten und eines invertierten Signals ermöglicht eine einfache Überwachung, wenn die Senderbaugruppe für jeden Kontrollsender eine Summierstufe aufweist, mit deren Eingängen die dem Kontrollsender und den entsprechenden Hauptsendern zugeordneten Kontrollempfänger verbunden sind. Dabei ist zweckmässigerweise dem Ausgang der Summierstufe der Senderbaugruppe eine Grenzwertstufe mit Meldeeinrichtung nachgeschaltet, die eine Meldung abgibt, wenn die Summe der Signale der Kontrollempfänger von Null abweicht.

Vorteilhafterweise kann auch jede Empfängerbaugruppe je Kontrollsender eine Summierstufe enthalten, deren Eingänge mit den Ausgängen der den Hauptsendern und dem Kontrollsender zugeordneten Empfänger verbunden sind. Damit werden bei Übertragung eines nichtinvertierten und eines invertierten Signals auf einfache Weise Fehler in der Übertragungseinrichtung erkannt. Zur Meldung der Fehler ist zweckmässigerweise dem Ausgang der Summierstufe der Empfängerbaugruppe eine Grenzwertstufe mit Meldeeinrichtung nachgeschaltet, die eine Abweichung der Summe der entsprechenden Empfangssignale von Null meldet.

Bei einer Übertragungseinrichtung, bei der die Summe der Signale mindestens zweier Sender einen konstanten Wert aufweist, ist eine Überwachung auf einfache Weise dadurch möglich, dass die Senderbaugruppe eine Summierstufe aufweist, deren Eingänge mit den Kontrollempfängern für die Signale mit konstanter Summe verbunden sind, wobei dem Ausgang jeder Summierstufe eine Grenzwertstufe mit Meldeeinrichtung nachgeschaltet ist. Ein Fehler der Schaltung wird dabei dadurch erkannt, dass die Summe der Signale von ihrem Sollwert abweicht.

In analoger Weise kann bei einer Übertragungseinrichtung, bei der die Summe der Signale mindestens zweier Sender einen konstanten Wert aufweist, eine Überwachung auf der Empfängerseite dadurch erfolgen, dass in jeder Empfängerbaugruppe den Empfängern der Signale mit konstanter Summe eine Summierstufe nachgeschaltet ist, wobei der Ausgang jeder Summierstufe mit einer Grenzwertstufe mit Meldeeinrichtung verbunden ist. Dabei können auch Fehler auf dem Übertragungsweg erkannt werden.

Jeder Grenzwertstufe der Empfängerbaugruppe kann ein Verzögerungsglied nachgeschaltet sein. Damit wird bei Fehlern im Sender ein verzögertes Ansprechen der Störmeldung auf der Empfängerseite gegenüber der Störmeldung auf der Senderseite erreicht. Bei selbsttätiger Abschaltung des Senders tritt auf der Empfängerseite keine Störmeldung auf.

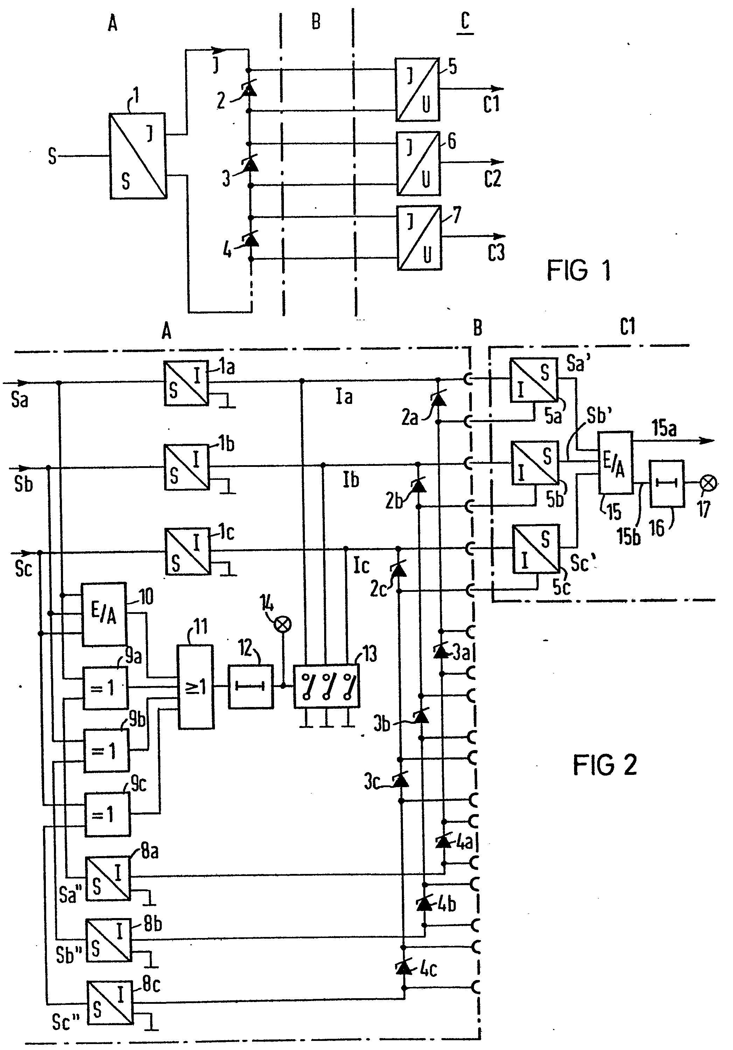

Die erfindungsgemässe Übertragungseinrichtung wird nachfolgend beispielhaft anhand der Fig. 1 bis 3 näher erläutert.

Fig. 1 zeigt zur Erläuterung des Übertragungsprinzips eine Grundschaltung. Das zu übertragende binäre oder analoge Signal S wird in der Senderbaugruppe A im Signalumsetzer 1 als Sender in den eingeprägten Strom I umgewandelt. Parallel zum Ausgang des Senders 1 liegt eine Reihenschaltung von im Beispiel drei Zenerdioden 2 bis 4 als Schwellwertgliedern. Parallel zu jeder Zenerdiode 2 bis 4 ist über die Übertragungsstrecke B ein Empfänger 5 bis 7 angeschlossen. Jeder Empfänger 5 bis 7 ist als Signalumsetzer ausgebildet und wandelt das Stromsignal I wieder in eine Spannung um. Die Schaltung ist so dimensioniert, dass die Zenerspannung jeder Z-Diode 2 bis 4 grösser ist als die Summe des maximalen Spannungsabfalls am zugeordneten Empfänger 5 bis 7 und des Spannungsabfalls auf der Übertragungsleitung. Die vom Sender 1 maximal gelieferte Spannung ist höher als die maximal in der am Senderausgang liegenden Schleife auftretende Gegenspannung.

Solange keine Unterbrechung in der Übertragungsstrecke B oder im Eingangskreis des Empfängers 5 bis 7 auftritt, liegt die an den Z-Dioden 2 bis 4 anstehende Spannung unter der Zenerspannung und alle Z-Dioden 2 bis 4 sperren. Der Strom I durchfliesst daher die Reihenschaltung der Empfänger 5 bis 7. Dabei ist sichergestellt, dass alle Empfänger 5 bis 7 dasselbe Signal erhalten. Sobald auf der Übertragungsstrecke B oder im Eingangskreis eines Empfängers 5 bis 7 eine Unterbrechung auftritt, steigt die Spannung an der zugeordneten Z-Diode 2 bis 4 über die Zenerspannung an, die betreffende Z-Diode wird daher leitend. Damit wird also die unterbrochene Strecke kurzgeschlossen und die nicht unterbrochenen Empfänger werden weiter mit Strom versorgt.

Bei dieser Schaltung wird daher mit geringem Aufwand sichergestellt, dass die Unterbrechung eines Empfängers oder einer Übertragungsleitung nicht zum Ausfall der anderen Empfänger führt und dass alle ungestörten Empfänger dasselbe Signal erhalten. Selbstverständlich können auch mehr als drei Empfänger versorgt werden, wenn in der Ausgangsschleife des Senders 1 entsprechend mehr Z-Dioden angeordnet sind.

Fig. 2 zeigt eine Übertragungseinrichtung für Binärsignale mit zusätzlichen Überwachungseinrichtungen zur weiteren Sicherung der Signalübertragung. Zur Übertragung eines 3-Bit-Binärsignals Sa, Sb, Sc sind in der Senderbaugruppe A drei Sender 1a, 1b, 1c vorgesehen. Die Sender 1a, 1b, 1c sind als Signalumformer ausgebildet und wandeln die Signale Sa, Sb, Sc in Ströme Ia, Ib, Ic um. An den Ausgangsklemmen jedes Senders 1a, 1b, 1c liegt die Reihenschaltung dreier Zenerdioden 2a, 3a, 4a bzw. 2b, 3b, 4b bzw. 2c, 3c, 4c und eines Kontrollempfängers 8a, 8b, 8c. Jeder Kontrollempfänger 8a bis 8c ist als Signalumformer ausgebildet und wandelt die Stromsignale Ia bis Ic in Spannungssignale Sa″ bis Sc″ um. Die Spannungssignale Sa″ bis Sc″ werden je einem Eingang der Antivalenzstufen 9a bis 9c zugeführt. Den zweiten Eingängen der Antivalenzstufen 9a bis 9c werden die Signale Sa bis Sc zugeführt. Mit den Antivalenzstufen 9a bis 9c wird die Übereinstimmung der gesendeten Stromsignale Ia bis Ic mit den Signalen Sa bis Sc überprüft. Jede Antivalenzstufe 9a bis 9c gibt ein «1»-Signal ab, wenn keine Übereinstimmung vorhanden ist. Die Kontrollempfänger 8a bis 8c sind an dem dem Bezugspotential zugewandten Ende jeder Reihenschaltung angeordnet, so dass ein Kurzschluss gegen Bezugspotential in der Reihenschaltung dazu führt, dass die Kontrollempfänger keinen Strom mehr erhalten und somit die Antivalenzstufen eine Abweichung des betreffenden Stromsignals Ia bis Ic vom Signal Sa bis Sc feststellen. Die Signale Sa bis Sc sind ausserdem einem Decoder 10 zugeführt, der bei unzulässigen Signalkombinationen, wie sie bei redundanten Signalcodes auftreten, am Ausgang ein «1»-Signal abgibt. Die Ausgangssignale des Decoders 10 und der Antivalenzstufen 9a bis 9c sind den Eingängen eines ODER-Gatters 11 zugeführt. Vom Ausgang des ODER-Gatters 11 wird über ein Verzögerungsglied 12 der dreipolige Schalter 13 angesteuert. Das Verzögerungsglied 12 ist vorgesehen, um falsche Fehlmeldungen, die durch Laufzeitunterschiede in den Übertragungswegen verursacht werden könnten, zu vermeiden. Bei geschlossenem Schalter 13 sind die Ausgänge aller Sender 1a bis 1c kurzgeschlossen. Damit wird also erreicht, dass bei Ansprechen des Decoders 10 oder der Antivalenzstufen 9a bis 9c, d.h. bei Auftreten einer unzulässigen Signalkombination, bei einem Fehler im Sender oder bei einer Unterbrechung bzw. einem Kurzschluss im Übertragungskreis die Senderbaugruppe A kein Signal mehr abgibt. Ausserdem ist dem Verzögerungsglied 12 eine Meldeeinrichtung 14 nachgeschaltet, die einen solchen Fehlerfall anzeigt.

Jeder Zenerdiode 2a bis 2c, 3a bis 3c, 4a bis 4c ist ein Empfänger parallelgeschaltet, wobei in Fig. 2 der Übersichtlichkeit wegen nur eine Empfängerbaugruppe C1 mit den räumlich zusammengefassten Empfängern 5a bis 5c für die Signale Sa bis Sc dargestellt ist. Jeder Empfänger 5a bis 5c ist als Signalumsetzer zur Umsetzung der Stromsignale Ia bis Ic in Spannungssignale Sa′ bis Sc′ ausgebildet. Dabei ist der Stromeingang potentialtrennend ausgeführt, um Signalverfälschungen bei Abweichung der Bezugspotentiale der Empfängerbaugruppe C1 und der Senderbaugruppe A auszuschliessen. Den Empfängern 5a bis 5c ist ein Decoder 15 nachgeschaltet, der Ausgänge 15a zur Signalauswertung und einen Ausgang 15b zur Meldung unzulässiger Signalkombinationen aufweist. Der Ausgang 15b ist über ein Verzögerungsglied 16 mit einer Meldeeinrichtung 17 verbunden.

Die Verzögerungszeit $t_E$ des Verzögerungsglieds 16 in der Empfängerbaugruppe C ist grösser als die Verzögerungszeit $t_s$ des Verzögerungsglieds 12 in der Senderbaugruppe A. Wenn in der Senderbaugruppe A ein Fehler auftritt und dieser durch die Antivalenzstufen 9a bis 9c oder den Decoder 10 erkannt wird, werden die Sender 1a bis 1c nach Ablauf der Verzögerungszeit $t_s$ abgeschaltet und die Meldeeinrichtung 14 gibt ein Fehlersignal ab. Da an den Empfängern 5a bis 5c nur für die Zeit $t_s$ eine unzulässige Signalkombination ansteht und die Verzögerungszeit $t_E$ des empfängerseitigen Verzögerungsgliedes 16 grösser ist als $t_s$, wird in der Empfängerbaugruppe C bei einer senderseitigen Störung kein Fehlersignal abgegeben. Bei einer empfängerseitigen Störung gibt dagegen nur die Empfängerbaugruppe C ein Fehlersignal ab. Die Fehlersignale zeigen also selektiv den gestörten Anlagenteil an.

Mit der erläuterten Übertragungseinrichtung ist also eine sichere Binärsignalübertragung möglich, da der Ausfall einer Übertragungsleitung oder eines Empfängers nicht den Ausfall weiterer Empfänger nach sich zieht. Senderseitig ist ein einfacher und funktionssicherer Vergleich der zu übertragenden Signale mit den tatsächlich gesendeten Signalen vorgesehen. Die Übereinstimmung der gesendeten Signale untereinander ist bereits durch die Schaltungsanordnung sichergestellt. Sowohl Sender als auch Empfänger enthalten eine Plausibilitätskontrolle in Form eines Decoders zur Erkennung unzulässiger Signalkombinationen.

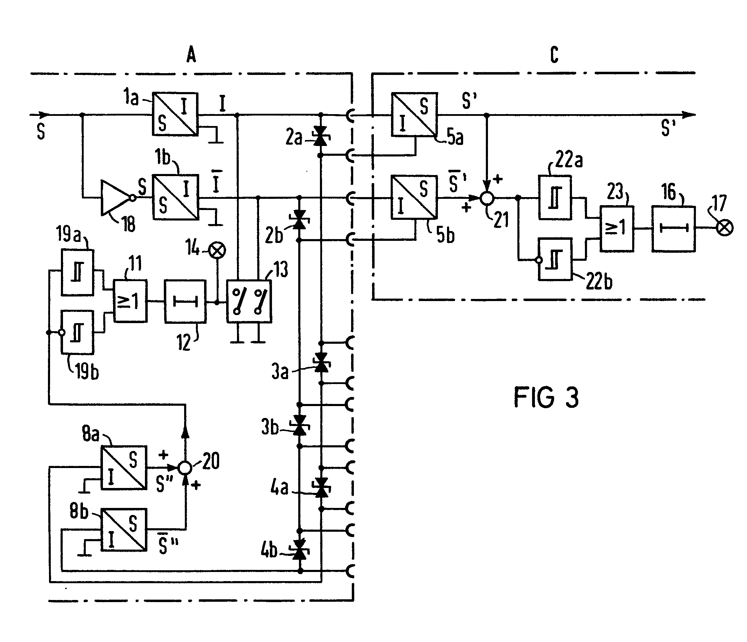

Fig. 3 zeigt eine Übertragungseinrichtung für bipolare Analogsignale. Das Analogsignal S wird durch den Signalumsetzer 1a als Sender in ein Stromsignal I und – nach Invertierung in der Invertierstufe 18 über den Signalumsetzer 1b als zweiten Sender in den Strom Ī umgesetzt. Parallel zu den Ausgangsklemmen jedes Senders 1a und 1b liegt eine Reihenschaltung von Schwellwertgliedern 2a, 3a, 4a bzw. 2b, 3b, 4b sowie je eines Signalumsetzers 8a bzw. 8b als Kontrollempfänger. Wegen der bipolaren Signale bestehen die Schwellwertglieder 2a bis 4a und 2b bis 4b jeweils aus zwei gegeneinandergeschalteten Zenerdioden, die somit in beiden Stromflussrichtungen eine Schwellspannung besitzen. Dabei gelten die bereits im Zusammenhang mit Fig. 1 erläuterten Dimensionierungsangaben für die Zenerspannungen. Die Ausgangssignale S″ des Kontrollempfängers 8a und Š″ des Kontrollempfängers 8b werden in der Summierstufe 20 addiert. Da das Signal Š durch Invertierung des Signals S gewonnen wurde, muss bei fehlerfreier Übertragung auch die Summe von S″ und Š″ Null sein. Zur Überwachung dieser Bedingung sind der Summierstufe 20 die parallelgeschalteten Grenzwertmelder 19a und 19b nachgeschaltet. Dabei erfasst der Grenzwertmelder 19a positive Abweichungen der Summe von Null, der Grenzwertgeber 19b wegen der an seinem Eingang vorgesehenen Invertierung negative Abweichungen. Wenn die Summe der Signale S'' und S̄'' um einen bestimmten Betrag von Null abweicht, so spricht also entweder der Grenzwertgeber 19a oder der Grenzwertgeber 19b an und schliesst über das ODER-Gatter 11 und die Verzögerungsstufe 12 den Schalter 13. Der Schalter 13 weist zwei Einschaltkontakte auf, die bei Ansteuerung des Schalters 13 die Ausgangssignale der Sender 1a und 1b kurzschliessen. Bei einem Fehler in einer der Senderschleifen des Senders 1a oder 1b werden also beide Signale I und Ī zu Null. Der Verzögerungsstufe 12 ist ein Meldeglied 14 nachgeschaltet, das diesen Fehlerfall anzeigt.

Durch die zusätzliche Übertragung des invertierten Signals S̄ und die Überwachungseinrichtung wird es also möglich, fehlerhafte Sender und Unterbrechungen oder Kurzschlüsse in den Senderschleifen zu erfassen.

Parallel zu jedem Schwellwertglied 2a bis 4a und 2b bis 4b liegt wiederum ein Empfänger, wobei in Fig. 3 der Übersichtlichkeit wegen nur die räumlich zusammengefassten Empfänger 5a und 5b dargestellt sind. Die Empfänger 5a und 5b sind wie in den bereits geschilderten Beispielen als potentialtrennende Signalumsetzer ausgebildet, die das Stromsignal I bzw. Ī in Spannungssignale S' bzw. S̄' umsetzen. Das Signal S' stellt direkt das gewünschte Empfangssignal dar, das Signal S̄' wird als Kontrollsignal verwendet und in der Summierstufe 21 zum Signal S' addiert. Bei fehlerfreier Übertragung muss auch die Summe der Signale S' und S̄' Null sein. Diese Bedingung wird wie im Senderbaustein A mit zwei Grenzwertstufen 22a und 22b überwacht, wobei die Grenzwertstufe 22a Abweichungen in positiver Richtung und die Grenzwertstufe 22b Abweichungen in negativer Richtung erkennt. Bei Ansprechen von einer der beiden Grenzwertstufen wird über das ODER-Gatter 23 und das Verzögerungsglied 16 die Meldeeinrichtung 17 angesteuert, die diesen Fehlerfall anzeigt. Die Verzögerungszeit $t_E$ des empfängerseitigen Verzögerungsgliedes 16 ist grösser als die Verzögerungszeit $t_s$ des senderseitigen Verzögerungsgliedes 12, so dass wie bei der Schaltung nach Fig. 2 eine Selektivität der Fehlermeldung erreicht wird.

Bei Übertragung von mehreren Analogsignalen muss nicht jedes einzelne Analogsignal auch invertiert übertragen werden, sondern es genügt im allgemeinen, zusätzlich zu den Analogsignalen die invertierte Summe aller Signale zu übertragen. Die Überwachung geschieht dann wie in der Schaltung nach Fig. 3 durch Addition der invertierten und der nichtinvertierten Summe, die bei fehlerfreier Schaltung ebenfalls das Ergebnis Null liefern müssen. Praktisch jede Abweichung eines übertragenen Signals vom Sollwert führt auch zur Abweichung der Signalsumme vom Sollwert.

Wenn die zu übertragenden Signale stets eine konstante Summe aufweisen, so wird eine besonders einfache Überwachung dadurch möglich, dass im Sender und in den Empfängern die Signalsummen mittels eines Grenzwertgebers überwacht werden. Dieses Verfahren bietet sich beispielsweise bei Drehstromnetzen an, wo die Summe aller Spannungen und Ströme stets Null sein muss.

Mit der beschriebenen Übertragungseinrichtung ist es also auch möglich, Analogsignale störsicher zu übertragen. Durch die beschriebenen Überwachungseinrichtungen werden nahezu alle Fehler in den Sendern, in den Empfängern und auf den Übertragungsleitungen erkannt.

**Patentansprüche**

1. Übertragungseinrichtung mit einer Senderbaugruppe mit mindestens einem Sender, der mit einem eingeprägten Strom ein Signal an mehrere Empfänger überträgt, die in räumlich getrennten Empfängerbaugruppen angeordnet sind, wobei die Empfänger eingangsseitig in Reihe geschaltet sind, dadurch gekennzeichnet, dass in jedem Sender (1) zwischen seinen Ausgangsklemmen eine Reihenschaltung von Schwellwertgliedern (2, 3, 4) angeschlossen ist, deren Anzahl der Anzahl der Empfänger (5, 6, 7) entspicht, wobei jeder Empfänger (5, 6, 7) eingangsseitig über eine gesonderte Übertragungsleitung (B) einem Schwellwertglied (2, 3, 4) parallelgeschaltet ist.

2. Übertragungseinrichtung nach Anspruch 1 für unipolare Signale, dadurch gekennzeichnet, dass jedes Schwellwertglied (2, 3, 4) eine Z-Diode ist.

3. Übertragungseinrichtung nach Anspruch 1 für bipolare Signale, dadurch gekennzeichnet, dass jedes Schwellwertglied (2a, 2b, 3a, 3b, 4a, 4b) aus der Reihenschaltung zweier gegeneinander geschalteter Z-Dioden besteht.

4. Übertragungseinrichtung nach einem der Ansprüche 1 bis 3, dadurch gekennzeichnet, dass in der Senderbaugruppe (A) jeder Reihenschaltung von Schwellwertgliedern (2a, 2b, 2c – 4a, 4b, 4c) ein Kontrollempfänger (8a, 8b, 8c) nachgeschaltet ist.

5. Übertragungseinrichtung nach Anspruch 4 für Binärsignale, dadurch gekennzeichnet, dass der Ausgang jedes Kontrollempfängers (8a, 8b, 8c) mit einem ersten Eingang einer Antivalenzstufe (9a, 9b, 9c) zum Signalvergleich verbunden ist, an deren zweitem Eingang das zu übertragende Signal ansteht.

6. Übertragungseinrichtung nach Anspruch 5, dadurch gekennzeichnet, dass jeder Antivalenzstufe (9a, 9b, 9c) eine Meldestufe (14) nachgeschaltet ist.

7. Übertragungseinrichtung nach Anspruch 5 oder 6, dadurch gekennzeichnet, dass der Ausgang jeder Antivalenzstufe (9a, 9b, 9c) mit dem Steuereingang eines zwischen Senderausgang und Bezugspotential der Schaltungsanordnung liegenden Schalters (13) verbunden ist.

8. Übertragungseinrichtung nach einem der Ansprüche 4 bis 7 mit mehreren Sendern zur Übertragung einer Binärsignalkombination, dadurch gekennzeichnet, dass jedem Kontrollempfänger (8a, 8b, 8c) ein Decoder (10) zur Erkennung unzulässiger Signalkombinationen nachgeschaltet ist.

9. Übertragungseinrichtung nach einem der Ansprüche 1 bis 7 mit mehreren Sendern zur Übertragung einer Binärsignalkombination, dadurch gekennzeichnet, dass jedem Empfänger (5a, 5b, 5c) ein Decoder (15) zur Erkennung unzulässiger Signalkombinationen nachgeschaltet ist.

10. Übertragungseinrichtung nach Anspruch 9, dadurch gekennzeichnet, dass dem Decoder (15) ein Verzögerungsglied (16) nachgeschaltet ist.

11. Übertragungseinrichtung nach einem der Ansprüche 1 bis 10, dadurch gekennzeichnet, dass die Senderbaugruppe (A) für jedes zu übertragende Signal einen Hauptsender (1a) und einen Kontrollsender (1b) aufweist, wobei der Kontrollsender (1b) das invertierte Signal des Hauptsenders (1a) überträgt.

12. Übertragungseinrichtung nach einem der Ansprüche 1 bis 10, dadurch gekennzeichnet, dass die Senderbaugruppe (A) für jedes zu übertragende Signal einen Hauptsender (1a) sowie für mehrere zu übertragende Signale einen gemeinsamen Kontrollsender aufweist, wobei der Kontrollsender die invertierte Summe der Signale des Hauptsenders (1a) überträgt.

13. Übertragungseinrichtung nach Anspruch 4 und Anspruch 11 oder nach Anspruch 4 und Anspruch 12, dadurch gekennzeichnet, dass die Senderbaugruppe (A) für jeden Kontrollsender (1b) eine Summierstufe (20) aufweist, mit deren Eingängen die dem Kontrollsender (1b) und den entsprechenden Hauptsendern (1a) zugeordneten Kontrollempfänger (8a, 8b) verbunden sind.

14. Übertragungseinrichtung nach Anspruch 13, dadurch gekennzeichnet, dass dem Ausgang der Summierstufe (20) der Senderbaugruppe (A) eine Grenzwertstufe (19a, 19b) mit Meldeeinrichtung (14) nachgeschaltet ist.

15. Übertragungseinrichtung nach Anspruch 11 oder 12, dadurch gekennzeichnet, dass jede Empfängerbaugruppe (C1–C3) je Kontrollsender (1b) eine Summierstufe (21) enthält, deren Eingänge mit den Ausgängen der den Hauptsendern (1a) und dem Kontrollsender (1b) zugeordneten Empfänger (5a, 5b) verbunden sind.

16. Übertragungseinrichtung nach Anspruch 15, dadurch gekennzeichnet, dass dem Ausgang der Summierstufe (21) der Empfängerbaugruppe (C1–C3) eine Grenzwertstufe (22a, 22b) mit Meldeeinrichtung (17) nachgeschaltet ist.

17. Übertragungseinrichtung nach Anspruch 4 und einem der folgenden, wobei die Summe der Signale mindestens zweier Sender einen konstanten Wert aufweist, dadurch gekennzeichnet, dass die Senderbaugruppe (A) eine Summierstufe (20) aufweist, deren Eingänge mit den Kontrollempfängern (8a, 8b, 8c) für die Signale mit konstanter Summe verbunden sind, wobei dem Ausgang jeder Summierstufe (20) eine Grenzwertstufe (19a, 19b) mit Meldeeinrichtung (14) nachgeschaltet ist.

18. Übertragungseinrichtung nach einem der Ansprüche 1 bis 17, wobei die Summe der Signale mindestens zweier Sender einen konstanten Wert aufweist, dadurch gekennzeichnet, dass in jeder Empfängerbaugruppe (C1, C2, C3) den Empfängern (5a, 5b, 5c) der Signale mit konstanter Summe eine Summierstufe (20) nachgeschaltet ist, wobei der Ausgang jeder Summierstufe (21) mit einer Grenzwertstufe (22a, 22b) mit Meldeeinrichtung (17) verbunden ist.

19. Übertragungseinrichtung nach Anspruch 16 oder 18, dadurch gekennzeichnet, dass jeder Grenzwertstufe (22a, 22b) der Empfängerbaugruppe (C1–C3) ein Verzögerungsglied (16) nachgeschaltet ist.

**Claims**

1. Communication equipment with a transmitter assembly having at least one transmitter which transmits, by means of a strictly proportional current, a signal to a plurality of receivers which are disposed in spatially separated receiver assemblies, the receivers being serially connected on the input side, characterised in that a serial connection of limiting elements (2, 3, 4) in each transmitter (1) is connected between the output terminals thereof, the number of such limiting elements corresponding to the number of receivers (5, 6, 7) and each receiver (5, 6, 7) is connected on the input side in parallel, via a separate communication line (B), to a limiting element (2, 3, 4).

2. Communication equipment according to claim 1 for unipolar signals, characterised in that each limiting element (2, 3, 4) is a Zener diode.

3. Communication equipment according to claim 1 for bipolar signals, characterised in that each limiting element (2a, 2b, 3a, 3b, 4a, 4b) comprises the serial connection of two Zener diodes connected in polarity opposition.

4. Transmission equipment according to any of the claims 1 to 3, characterised in that a monitoring receiver (8a, 8b, 8c) is connected downstream of each serial connection of limiting elements (2a, 2b, 2c – 4a, 4b, 4c) in the transmitter assembly (A).

5. Communication equipment according to claim 4 for binary signals, characterised in that for signal comparison purposes the output of each monitoring receiver (8a, 8b, 8c) is connected to a first input of an antivalency stage (9a, 9b, 9c), the second input of which is supplied with the signal that is to be transmitted.

6. Communication equipment according to claim 5, characterised in that a signalling stage (14) is connected downstream of each antivalency stage (9a, 9b, 9c).

7. Communication equipment according to claim 5 or 6, characterised in that the output of each antivalency stage (9a, 9b, 9c) is connected to the control input of a switch (13) situated between the transmitter output and the reference voltage of the circuit system.

8. Communication equipment according to any of the claims 4 to 7 with a plurality of transmitters for transmitting a binary signal combination, characterised in that for the purpose of recognising impermissible signal combinations a decoder (10) is connected downstream of each monitoring receiver (8a, 8b, 8c).

9. Communication equipment according to any of the claims 1 to 7 with a plurality of transmitters for transmitting a binary signal combination, characterised in that for the purpose of recognising impermissible signal combinations a decoder (15) is connected downstream of each receiver (5a, 5b, 5c).

10. Communication equipment according to claim 9, characterised in that a delay element (16) is connected downstream of the decoder (15).

11. Communication equipment according to any of the claims 1 to 10, characterised in that the transmitter assembly (A) for each signal to be transmitted comprises a main transmitter (1a) and a monitoring transmitter (1b) which transmits the inverted signal of the main transmitter (1a).

12. Communication equipment according to any of the claims 1 to 10, characterised in that the transmitter assembly (A) for each signal to be transmitted comprises a main transmitter (1a) as well as a common monitoring transmitter for a plurality of signals which are to be transmitted, said monitoring transmitter being adapted to transmit the inverted sum of the signals of the main transmitter (1a).

13. Communication equipment according to claim 4 and claim 11 or according to claim 4 and claim 12, characterised in that the transmitter assembly (A) for each monitoring transmitter (1b) comprises a summing stage (20) the inputs of which are connected to the monitoring receivers (8a, 8b) which are allocated to the monitoring transmitter (1b) and to the corresponding main transmitters (1a).

14. Communication equipment according to claim 13, characterised in that a limiter stage (19a, 19b) with signalling means (14) is connected downstream of the output of the summing stage (20) associated with the transmitter assembly (A).

15. Communication equipment according to claim 11 or 12, characterised in that each receiver assembly (C1–C3) contains for each monitoring transmitter (1b) a summing stage (21), the inputs of which are connected to the outputs of the receivers (5a, 5b) which are allocated to the main transmitters (1a) and to the monitoring transmitter (1b).

16. Communication equipment according to claim 15, characterised in that a limiting stage (22a, 22b) with signalling means (17) is connected downstream of the output of the summing stage (21) associated with the receiver assembly (C1–C3).

17. Communication equipment according to claim 4 and any of the succeeding claims, in which the sum of the signals of at least two transmitters has a constant value, characterised in that the transmitter assembly (A) is provided with a summing stage (20) the inputs of which are connected to the monitoring receivers (8a, 8b, 8c) for the signals with a constant sum, a limiting stage (19a, 19b) with signalling means (14) being connected downstream of the output of each summing stage (20).

18. Communication equipment according to any of the claims 1 to 17 in which the sum of the signals of at least two transmitters has a constant value, characterised in that a summing stage (20) is connected downstream of the receivers (5a, 5b, 5c) of the signals with a constant sum in each of the receiver assemblies (C1, C2, C3) and the output of each summing stage (21) is connected to a limiting stage (22a, 22b) having signalling means (17).

19. Communication equipment according to claim 16 or 18, characterised in that a delay element (16) is connected downstream of each limiting stage (22a, 22b) of the receiver assembly (C1–C3).

**Revendications**

1. Dispositif de transmission comportant un module d'émission comportant au moins un émetteur, qui, avec un courant injecté, transmet un signal à plusieurs récepteurs qui sont disposés dans des modules de réception séparés dans l'espace, les récepteurs étant branchés en série sur leur côté entrée, caractérisé par le fait que dans chaque émetteur (1) se trouve raccordé, entre ses bornes de sortie, un montage série d'éléments à valeur de seuil (2, 3, 4) dont le nombre correspond au nombre des récepteurs (5, 6, 7), chaque récepteur (5, 6, 7) étant branché en parallèle, du côté entrée, avec un élément à valeur de seuil (2, 3, 4), par l'intermédiaire d'une ligne de transmission particulière (B).

2. Dispositif de transmission suivant la revendication 1 pour des signaux unipolaires, caractérisé par le fait que chaque élément à valeur de seuil (2, 3, 4) est une diode Zener.

3. Dispositif de transmission suivant la revendication 1 pour des signaux bipolaires, caractérisé par le fait que chaque élément à valeur de seuil (2a, 2b, 3a, 3b, 4a, 4b) est constitué par le montage série formé de deux diodes Zener branchées en inverse.

4. Dispositif de transmission suivant l'une des revendications 1 à 3, caractérisé par le fait que dans le module d'émission (A), un récepteur de contrôle (8a, 8b, 8c) est branché en aval de chaque montage série formé d'éléments à valeur de seuil (2a, 2b, 2c – 4a, 4b, 4c).

5. Dispositif de transmission suivant la revendication 4 pour des signaux binaires, caractérisé par le fait que la sortie de chaque récepteur de contrôle (8a, 8b, 8c) est reliée, pour la comparaison de signaux, à une première entrée d'un étage à anticoïncidence (9a, 9b, 9c) à la seconde entrée duquel est appliqué le signal devant être transmis.

6. Dispositif de transmission suivant la revendication 7, caractérisé par le fait qu'un étage de signalisation (14) est branché en aval de chaque étage à anticoïncidence (9a, 9b, 9c).

7. Dispositif de transmission selon la revendication 5 ou 6, caractérisé en ce que la sortie de chaque circuit à anticoïncidence (9a, 9b, 9c) est relié à l'entrée de commande d'un commutateur (13) disposé entre la sortie de l'émetteur et le potentiel de référence du montage.

8. Dispositif de transmission suivant l'une des revendications 4 à 7, comportant plusieurs émetteurs pour la transmission d'une combinaison de signaux binaires, caractérisé par le fait qu'un décodeur (10) servant à identifier des combinaisons inadmissibles de signaux est branché en aval de chaque récepteur de contrôle (8a, 8b, 8c).

9. Dispositif de transmission suivant l'une des revendications 1 à 7 comportant plusieurs émetteurs pour la transmission d'une combinaison de signaux binaires, caractérisé par le fait qu'un décodeur (15) servant à identifier des combinaisons inadmissibles de signaux est branché en aval de chaque récepteur (5a, 5b, 5c).

10. Dispositif de transmission suivant la revendication 9, caractérisé par le fait qu'une ligne à retard (16) est branchée en aval du décodeur (15).

11. Dispositif de transmission suivant l'une des revendications 1 à 10, caractérisé par le fait que le module d'émission (A) comporte pour chaque signal devant être transmis un émetteur principal (1a) et un émetteur de contrôle (1b), l'émetteur de contrôle (1b) transmettant le signal inversé de l'émetteur principal (1a).

12. Dispositif de transmission suivant l'une des revendications 1 à 10, caractérisé par le fait que le module d'émission (A) pour chaque signal devant être transmis comporte un émetteur principal (1a) ainsi que, pour plusieurs signaux devant être transmis, un émetteur de contrôle commun, l'émetteur de contrôle transmettant la somme inversée des signaux de l'émetteur principal (1a).

13. Dispositif de transmission suivant la revendication 4 et la revendication 11 ou la revendication 4 et la revendication 12, caractérisé par le fait que le module d'émission (A) comporte pour chaque émetteur de contrôle (1b) un étage additionneur (20) aux entrées duquel sont reliés les récepteurs de contrôle (8a, 8b) associés à l'émetteur de contrôle (1b) et aux émetteurs principaux correspondants (1a).

14. Dispositif de transmission suivant la revendication 13, caractérisé en ce qu'un étage à valeur limite (19a, 19b) comportant un dispositif de signalisation (14) est branché en aval de la sortie de l'étage additionneur (20) du module d'émission (A).

15. Dispositif de transmission suivant la revendication 11 ou 12, caractérisé par le fait que chaque module de réception (C1–C3) contient pour chaque émetteur de contrôle (1b) un étage additionneur (21) dont les entrées sont reliées aux sorties des récepteurs (5a, 5b) associés aux émetteurs principaux (1a) et à l'émetteur de contrôle (1b).

16. Dispositif de transmission suivant la revendication 15, caractérisé en ce qu'un étage à valeur limite (22a, 22b) comportant un dispositif de signalisation (17) est branché en aval de la sortie de l'étage additionneur (21) du module de réception (C1–C3).

17. Dispositif de transmission suivant la revendication 4 et l'une des suivantes, dans lequel la somme des signaux d'au moins deux émetteurs possède une valeur constante, caractérisé par le fait que le module d'émission (A) comporte un étage additionneur (20) dont les entrées sont reliées aux récepteurs de contrôle (8a, 8b, 8c) pour les signaux possédant une somme constante, un étage à valeur limite (19a, 19b) comportant un dispositif de signalisation (14) étant branché en aval de la sortie de chaque étage additionneur (20).

18. Dispositif de transmission suivant l'une des revendications 1 à 17, dans lequel la somme des signaux d'au moins deux émetteurs possède une valeur constante, caractérisé par le fait que dans chaque module d'émission (C1, C2, C3) un étage additionneur (20) est branché en aval des récepteurs (5a, 5b, 5c) des signaux fournissant une somme constante, la sortie de chaque étage additionneur (21) étant reliée à un étage à valeur limite (22a, 22b) comportant un dispositif de signalisation (17).

19. Dispositif de transmission suivant la revendication 16 ou 18, caractérisé par le fait qu'une ligne à retard (16) est branchée en aval de chaque étage à valeur limite (22a, 22b) du module de réception (C1–C3).

FIG 1

FIG 2

FIG 3